Europäisches Patentamt

European Patent Office

Office européen des brevets

(11) Veröffentlichungsnummer: **0 430 015 A1**

(12) **EUROPÄISCHE PATENTANMELDUNG**

(21) Anmeldenummer: 90122093.9

(51) Int. Cl.5: **G01F 1/68**

(22) Anmeldetag: **19.11.90**

(30) Priorität: **01.12.89 DE 3939885**

(43) Veröffentlichungstag der Anmeldung:
**05.06.91 Patentblatt 91/23**

(84) Benannte Vertragsstaaten:
**DE FR GB IT Patentblatt**

(71) Anmelder: **Siemens Aktiengesellschaft**
**Wittelsbacherplatz 2**
**W-8000 München 2(DE)**

(72) Erfinder: **Weinel, Johann**
**Bärenweg 26**
**W-7500 Karlruhe 21(DE)**

(54) **Strömungsdetektor.**

(57) Der Strömungsdetektor weist zwei in Strömungsrichtung hintereinander angeordnete, in Wärmekopplung stehende Heizwiderstände (2, 2') auf, von denen der erste (2) den Zweig einer Widerstandsmeßbrücke (1) bildet und der zweite (2') aus einer elektrischen Energiequelle mit einstellbarer Spannung ($U_2$) gespeist wird. Durch entsprechende Wahl der einstellbaren Spannung ($U_2$) läßt sich das an der Meßdiagonale der Meßbrücke (1) abgreifbare Meßsignal der Höhe nach beeinflussen und somit der Höhe nach beeinflussen und somit der Meßbereich variieren. Mit einer Anordnung von zwei derartigen Strömungsdetektoren in zwei gleichartigen Strömungssystemen läßt sich die Summe oder die Differenz ihrer Meßsignale bilden.

Die Erfindung wird eingesetzt als Mikro-Strömungsfühler in Gasanalysegeräten, insbesondere zur Unterdrückung bzw. Kompensation von Störkomponenten.

FIG 1

## STRÖMUNGSDETEKTOR

Die Erfindung betrifft einen Strömungsdetektor nach dem Hitzdraht-Anemometerprinzip mit zwei in geringem Abstand zueinander in Strömungsrichtung angeordneten, miteinander in Wärmekopplung stehenden Heizwiderständen und einer Widerstandsmeßbrücke.

Es sind sogenannte Hitzdraht-Anemometer bekannt, bei denen die durch die Gasströmung hervorgerufene Abkühlung eines elektrisch beheizten Widerstandsdrahtes eine Widerstandsänderung hervorruft, die als Meßeffekt benutzt wird. Derartige Anordnungen sind jedoch insbesondere bei schwachen Gasströmungen relativ unempfindlich. Eine in der Größenordnung einer Zehnerpotenz höhere Empfindlichkeit läßt sich mit einer z. B. aus der DE-PS 242 038 bekannten einrichtung erreichen, die aus einer Widerstandsmeßbrücke besteht, in der zwei benachbarte Zweige aus sehr dünnem, von dem Brücken-Speisestrom erwärmten Draht mit großem Widerstands-Temperatur-Koeffizienten bestehen. Die beiden Drähte liegen hintereinander in dem strömenden Medium. Bei der Messung wird der von dem strömenden Medium zuerst getroffene Zweig stärker abgekühlt als der anschließend getroffene, der von bereits vorgewärmtem Gas bespült wird. Infolgedessen ändert sich der Widerstand des ersten Zweiges gegenüber dem des zweiten Zweiges, die Brücke wird verstimmt, und das in der Meßdiagonale abgreifbare Meßsignal ist ein Maß für die Strömung.

Um den Platzbedarf zu verringern, ist es aus der DE-PS 15 73 098 bekannt, als Heizwiderstände anstelle der dünnen Drähte zwei aus einem temperaturempfindlichen elektrischen Material bestehende ebene Gitter zu verwenden, deren Ebene senkrecht zur Strömungsrichtung ausgerichtet sind und die in Wärmekopplung zueinander stehen. Diese sogenannten Mikro-Strömungsfühler werden bevorzugt als Detektoren in Gasanalysegeräten, z. B. in nichtdispersiven Infrarot-Analysatoren, eingesetzt, um die dort als Meßeffekt auftretenden pulsierenden Strömungen, die aus Druckunterschieden im $\mu$bar-Bereich herrühren, in ein elektrisches Meßsignal umzuwandeln.

Benützt man einen Strömungsdetektor, wie er in Anspruch 1 angegeben ist, so läßt sich seine Empfindlichkeit durch Einstellung der Speiseenergie des zweiten Heizwiderstandes in einem weiten Bereich verändern und der jeweiligen Meßaufgabe anpassen.

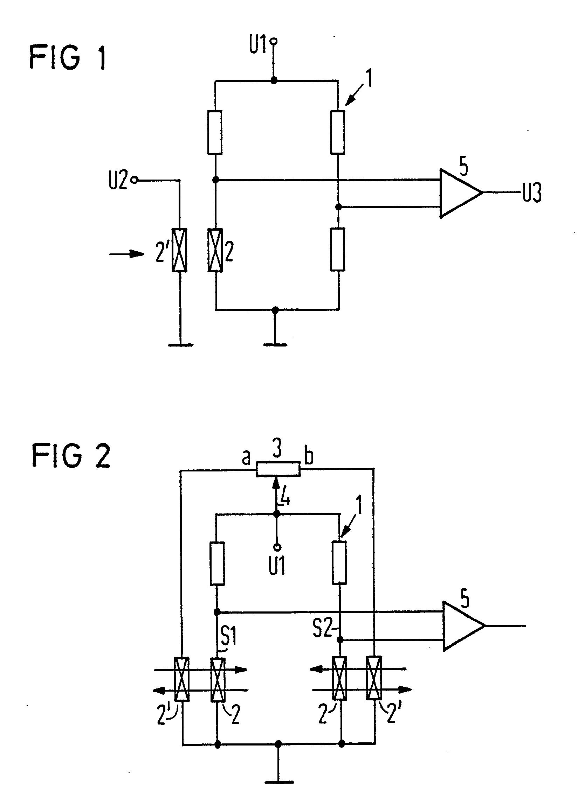

Zur Erläuterung der Erfindung ist in der Figur 1 ein Prinzipschaltbild dargestellt. Figur 2 zeigt die Ausführung mit zwei Strömungsdetektoren.

In einen der Brückenzweige einer Widerstandsmeßbrücke 1 ist ein erster Heizwiderstand 2 eines aus zwei in Wärmekopplung stehenden und einer Gasströmung (Pfeil) ausgesetzten Heizwiderständen 2, 2' geschaltet. Die Widerstandsmeßbrücke 1 wird aus einer elektrischen Energiequelle mit der konstanten Spannung $U_1$ gespeist, der Speisestrom ist so eingestellt daß der erste Heizwiderstand 2 des Strömungsdetektors auf eine über der Umgebungstemperatur liegenden Temperatur aufgeheizt wird. Die Meßdiagonale der Brücke 1 ist an einen Verstärker 5 angeschlossen, an dessen Ausgang das Meßsignal $U_3$ auftritt. Der zweite Heizwiderstand 2' des Strömungsdetektors wird aus einer eigenen Energiequelle mit der einstellbaren Spannung $U_2$ gespeist. Durch Änderung der Spannung $U_2$ läßt sich das in der Meßdiagonale der Widerstandsmeßbrücke 1 abgegriffene Meßsignal $U_3$ beeinflussen.

Bei Gasanalysegeräten treten im praktischen Gebrauch durch Erschütterungen hervorgerufene Druckimpulse auf, die sich dem eigentlichen Meßsignal störend überlagern oder es verfälschen. Zur Kompensation oder Teilkompensation derartiger Störgrößen läßt sich eine Schaltungsanordnung gemäß Anspruch 2 einsetzen, bei der zwei Strömungsdetektoren der in Anspruch 1 genannten Art Meß- und Hilfsgasströmungen gleicher Frequenz ausgesetzt sind. Durch Differenzbildung wird ein Teil des in der Meßdiagonale der Widerstandsmeßbrücke auftretenden Meßsignals kompensiert.

Eine in der Praxis bewährte Schaltungsanordnung unter Verwendung des beschriebenen Prinzips ist in Figur 2 dargestellt. In zwei benachbarten Zweigen einer Widerstandsmeßbrücke 1, die aus einer Energiequelle mit der konstanten Spannung $U_1$ gespeist wird, liegt hier je ein erster Heizwiderstand 2 zweier Strömungsdetektoren. Die zweiten Heizwiderstände 2' werden entweder aus separaten Energiequellen mit einstellbarer Spannung gespeist oder, wie dargestellt, aus einem Spannungsteiler 3 mit einstellbarem Teilverhältnis, dessen feste Endanschlüsse a und b jeweils mit den Heizwiderständen 2' verbunden sind und dessen Schleifer 4 an die Energiequelle mit der Spannung $U_1$ angeschlossen ist. In der gezeigten Schaltung sind die beiden Strömungsdetektoren in Differenz geschaltet. Pfeile bezeichnen die wechselnden Strömungsrichtungen. Bei der Kalibrierung sei beispielsweise S1 das Signal des einen Strömungsdetektors, S2 das des anderen, S1 sei halb so groß wie S2. Sollen beide Signale gegeneinander zu Null kompensiert werden, verschiebt man den Schleifer 4 in Richtung a. Dabei vergrößert sich das Signal S1, S2 verringert sich, so daß bei einer bestimmten Schleiferstellung beide Signale gleich groß sind mit entgegengesetzter Polarität.

**Ansprüche**

1. Strömungsdetektor nach dem Hitzdraht-Anemometerprinzip mit zwei in geringem Abstand zueinander in Strömungsrichtung angeordneten, miteinander in Wärmekopplung stehenden Heizwiderständen und einer Widerstandsmeßbrücke, **dadurch gekennzeichnet**, daß der erste Heizwiderstand (2) einen Zweig der Widerstandsmeßbrücke (1) bildet und der zweite Heizwiderstand (2') an eine einstellbare Energiequelle angeschlossen ist.

2. Schaltungsanordnung mit zwei Strömungsdetektoren nach Anspruch 1, **dadurch gekennzeichnet** daß der jeweils erste Heizwiderstand (2) in je einen Zweig der Widerstandsmeßbrücke (1) geschaltet ist und der jeweils zweite Heizwiderstand (2') aus einstellbaren Energiequellen gespeist werden.

3. Schaltungsanordnung mit zwei Strömungsdetektoren nach Anspruch 2, **gekennzeichnet durch** einen Spannungsteiler (3) mit einstellbarem Teilverhältnis, mit dessen festen Endanschlüssen (a und b) die zweiten Heizwiderstände (2') verbunden sind. und dessen Schleifer (4) an eine Energiequelle ($U_1$) angeschlossen ist.

## 1/1

**FIG 1**

**FIG 2**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 043 195  (C.J. HUNTING)<br>* Spalte 5, Zeile 7 - Spalte 6, Zeile 2; Figuren 1, 2 *<br>— — — | 1-3 | G 01 F<br>1/68 |
| X | US-A-3 246 515  (A.F. MARTINO)<br>* Spalte 2, Zeilen 1 - 72; Figur 1 *<br>— — — | 1,2 | |
| X | CONTROL AND INSTRUMENTATION. vol. 6, no. 5, Mai 1974, LONDON GB Seite 7 "Matched thermistors provide alternative solutions to flow measurement problems"<br>* Seite 7, linke Spalte; Figur 1 *<br>— — — | 1-3 | |
| X | DE-A-1 773 183  (INSTITUT FRANCAIS DU PEROLE DES CARBURANTS ET LUBRIFIANTS)<br>* Seite 4, Absatz 2 - Seite 5, Absatz 1 * * Seite 7, Absatz 5 - Seite 8, Absatz 4; Figuren 1, 3 *<br>— — — | 1,2 | |
| X | US-A-4 682 496  (K.M. AICHI)<br>* Spalte 4, Zeile 32 - Spalte 6, Zeile 3; Figur 8 *<br>— — — | 1,2 | |
| X | WO-A-8 707 716  (ROSEMOUNT INC.)<br>* Seite 7, Zeile 4 - Seite 9, Zeile 6; Figur 4 *<br>— — — | 1,2 | RECHERCHIERTE SACHGEBIETE (Int. Cl.5) |
| D,A | DE-B-1 573 098  (SIEMENS)<br>* Spalte 3, Zeile 25 - Spalte 4, Zeile 14; Figur *<br>— — — | 1-3 | G 01 F |
| P,X | DE-A-3 820 025  (E. HISS)<br>* Spalte 4, Zeilen 5 - 26; Figur 2 *<br>— — — — — | 1-3 | |

Der vorliegende Recherchenbericht wurde für alle Patentansprüche erstellt

| Recherchenort | Abschlußdatum der Recherche | Prüfer |
|---|---|---|
| Den Haag | 25 Februar 91 | HEINSIUS R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument